# FASCICULE DE BREVET EUROPEEN

(11) **EP 0 617 691 B1**
(45) Date de publication et mention de la délivrance du brevet: **06.03.1996**
(21) Numéro de dépôt: 93922877.1
(22) Date de dépôt: 22.10.1993
(51) Int. Cl.: B65G 47/26, B65G 35/08

(54) **PROCEDE ET DISPOSITIF POUR VEHICULER DES OBJETS LE LONG D'UN CIRCUIT, ET UTILISATION DE CE DISPOSITIF**
VERFAHREN UND VORRICHTUNG ZUM BEWEGEN VON GEGENSTÄNDEN UM EINE BAHN UND VERWENDUNG DER VORRICHTUNG
PROCESS AND DEVICE FOR CONVEYING OBJECTS ALONG A CIRCUIT AND USE THEREOF

(30) Priorité: 23.10.1992 FR 9212699
(43) Date de publication de la demande: 05.10.1994
(73) Titulaire: JEAN GALLAY S.A., CH-1228 Plan-Les-Ouates Genève (CH)
(72) Inventeur: RICHARD, Gilles, F-01550 Collonge-Fort-l'Ecluse (FR); VIDONNE, Bernard, F-74350 Cruseilles (FR)
(74) Mandataire: Nithardt, Roland
(86) Numéro de dépôt international: CH9300249
(87) Numéro de publication internationale: WO9410072

(56) Documents cités:
- EP-A- 0 075 531
- EP-A- 0 264 781
- WO-A-85/01718
- WO-A-92/05097
- US-A- 4 197 073
- US-A- 4 694 951
- PATENT ABSTRACTS OF JAPAN vol. 7, no. 87 (P-190)(1232) 12 Avril 1983 & JP,A,58 014 341 (PIONEER) 27 Janvier 1983

## Description

La présente invention concerne un procédé pour véhiculer des objets le long d'un circuit, dans lequel on place chaque objet sur une palette de transport et l'on fait cheminer les palettes pas à pas le long du circuit pour leur faire traverser successivement un premier poste de travail, où les objets présentent entre eux un premier espacement longitudinal, et au moins un deuxième poste de travail où les objets présentent entre eux un deuxième espacement longitudinal, supérieur au premier espacement, ce procédé comprenant une étape d'écartement des objets entre le premier et le deuxième poste de travail.

L'invention concerne également un dispositif pour véhiculer des objets le long d'un circuit, comportant des palettes de transport disposées en file sur des tronçons de voie formant au moins une partie dudit circuit et traversant successivement un poste de chargement où chaque objet est placé sur une palette, un premier poste de travail, au moins un deuxième poste de travail où les objets sont traités en groupes d'objets, et un poste de déchargement où les objets sont retirés des palettes, les objets présentant entre eux, au premier poste de travail, un premier espacement longitudinal et, au deuxième poste de travail, un deuxième espacement longitudinal, supérieur au premier espacement, le dispositif comportant des moyens d'entraînement pour faire avancer les palettes pas à pas le long des tronçons de voie. L'invention concerne également une utilisation d'un tel dispositif pour véhiculer des préformes dans une installation de fabrication de récipients soufflés en matière thermoplastique.

Le transport d'objets sur des palettes individuelles le long d'un circuit parcourant une ligne de fabrication, d'assemblage ou de traitement quelconque est très largement répandu. En général, le circuit est fermé et les palettes sont poussées pas à pas à une cadence donnée, dictée par le temps requis pour effectuer les opérations dans les différents postes de la ligne.

Les dispositifs de ce genre sont utilisés notamment dans des lignes de fabrication de récipients en matière thermoplastique, qui sont moulés par soufflage à partir de préformes. Ces lignes comportent habituellement une unité de chargement des préformes sur les palettes, un four de préchauffage que les préformes transportées traversent pendant un laps de temps nécessaire au ramollissement de la matière, un poste de moulage par soufflage et un poste de déchargement où les récipients moulés sont retirés des palettes. Les palettes vides suivent ensuite une voie de retour qui ferme le circuit.

Dans le cas où un poste de travail nécessite un temps d'immobilisation des objets plus long que les autres postes, il doit pouvoir traiter simultanément plusieurs objets afin de ne pas ralentir la cadence de la ligne. C'est notamment le cas du poste de moulage par soufflage mentionné ci-dessus, se composant généralement de deux demi-moules à plusieurs cavités que l'on doit écarter transversalement pour permettre l'introduction des palettes, puis refermer avant d'effectuer le moulage par soufflage, refroidissement etc. Le moulage simultané de plusieurs objets permet donc d'accroître la cadence du cheminement des palettes sur le circuit.

Les dispositifs connus, fonctionnant selon ce principe, nécessitent des équipements spéciaux de stockage momentané des palettes avant leur introduction en groupe dans le moule, pendant que les palettes suivantes continuent à avancer sur le circuit. Ce genre de ligne présente en outre un problème concernant l'espacement entre les objets successifs. Il est souhaitable que cet espacement soit aussi petit que possible sur la plus grande partie du circuit, notamment afin de réduire les accélérations trop importantes. En outre, l'espacement des objets doit être aussi réduit que possible pendant le passage dans le four de préchauffage, afin que celui-ci assure la durée de préchauffage voulue sans être excessivement long. Par contre, cet espacement doit impérativement être supérieur à une limite qui dépend de la taille de l'objet fabriqué, pour éviter que deux objets successifs se touchent. En pratique, une limite inférieure encore plus sévère est imposée par la taille des moules, notamment quand le poste de moulage est agencé pour souffler simultanément plusieurs objets respectivement portés par un groupe de palettes alignées.

Pour changer l'espacement des objets entre deux valeurs prédéterminées, une solution connue (notamment par la demande de brevet français publiée sous le numéro FR-A-2 667 051 présentant un procédé selon le préambule de la revendication 1 et un dispositif selon le préambule de la revendication 8) consiste à utiliser des palettes rectangulaires et à placer ces palettes soit longitudinalement, soit transversalement dans la file de palettes adjacentes qui parcourt une partie donnée du circuit. Dans l'application évoquée ci-dessus, les palettes sont adjacentes par leurs grands côtés dans la zone du four de préchauffage, pour déterminer un petit espacement des objets et par conséquent un séjour prolongé dans cette zone, et sont adjacentes par leurs petits côtés dans la zone du poste de moulage et du poste de déchargement, pour déterminer un grand espacement des objets. Deux méthodes sont possibles pour passer du premier espacement au second et vice-versa. La plus simple consiste à former un coude à angle droit sur le circuit des palettes, sans changer l'orientation des palettes au passage de ce coude. Cela présente toutefois l'inconvénient d'imposer une disposition malcommode de la ligne de fabrication, puisque le four et le poste de moulage doivent être orientés perpendiculairement l'un à l'autre. L'autre solution consiste à faire tourner d'un quart de tour chaque palette sans changer sa direction de transport, mais cela nécessite un mécanisme délicat, capable de séparer chaque palette de la suivante pour qu'elle puisse pivoter librement et ceci à la cadence rapide de progression des palettes. Par ailleurs, l'utilisation de palettes rectangulaires se prête mal à la fabrication d'objets de différentes tailles, donc nécessitant différentes valeurs du grand espacement, puisqu'il faut alors changer la longueur des palettes, les dimensions de certains tronçons de voie, le pas d'avancement dans la direction longitudinale des palettes etc., pour chaque taille d'objets fabriqués.

Le brevet US-A-4 197 073 décrit une installation de moulage comportant un poste d'injection de préformes et un poste de soufflage des préformes pour fabriquer des bouteilles. Huit préformes sont transportées ensemble d'un poste à l'autre par un convoyeur à va-et-vient comportant quatre supports doubles qui sont placés ensemble sur des rails divergents pour être espacés à côté du poste de soufflage, où les préformes sont prélevées par un extracteur. Les supports analogues à des palettes effectuent donc simplement un va-et-vient le long des rails sans être transférés d'un convoyeur à un autre. Les préformes ne peuvent pas atteindre un poste de travail en restant sur les supports, c'est-à-dire qu'il ne s'agit pas d'un circuit de transport par palettes.

La présente invention a pour but de proposer un procédé et un dispositif permettant de faire varier d'une manière plus souple l'espacement entre les objets transportés par les palettes. Un but particulier de l'invention est de permettre l'utilisation de palettes non rectangulaires dans un tel dispositif. Un autre but particulier de l'invention est de rendre possible un ajustement de la valeur du grand espacement pour l'adapter aux différentes tailles des objets à transporter.

A cet effet, le procédé selon l'invention est caractérisé en ce que ledit premier espacement est défini par un premier intervalle entre les palettes et ledit deuxième espacement est défini par un deuxième intervalle, supérieur au premier, entre les palettes, et en ce que, dans l'étape d'écartement, on déplace transversalement un groupe de palettes présentant le premier intervalle et l'on écarte longitudinalement les palettes de ce groupe pour obtenir le deuxième intervalle entre elles, puis on introduit ces palettes ainsi espacées dans le deuxième poste de travail.

De cette manière, le deuxième intervalle entre les palettes ne dépend pas de la dimension des palettes et peut être ajusté à volonté, notamment en fonction de la taille des moules. Il n'y a pas besoin de changer l'orientation des palettes, même dans un circuit fermé, et rien ne s'oppose à l'utilisation de palettes carrées ou rondes. Le premier et le deuxième poste de travail peuvent être orientés dans la même direction, avec un faible décalage transversal résultant du déplacement transversal des palettes entre eux. Dans les cas où le mouvement d'écartement des palettes doit avoir une grande amplitude, il peut s'effectuer graduellement après un premier déplacement transversal qui libère l'arrivée des palettes suivantes, c'est-à-dire que la cadence de cette arrivée n'a pas besoin d'être ralentie.

Dans une forme particulièrement avantageuse du procédé, ledit premier intervalle est nul, les palettes étant adjacentes.

De préférence, ledit déplacement transversal est un déplacement horizontal entre deux tronçons de circuit qui sont parallèles. Il est possible de rapprocher à nouveau les palettes au-delà du deuxième poste de travail pour rétablir le premier intervalle entre elles.

Dans une première forme particulière du procédé, on déplace transversalement les palettes dudit groupe et, dans un second temps, on écarte ces palettes pour obtenir ledit deuxième intervalle.

Dans une autre forme particulière du procédé, on déplace transversalement et on écarte longitudinalement les palettes dudit groupe pour obtenir ledit deuxième intervalle, ces deux opérations étant effectuées simultanément sur deux groupes adjacents.

Dans une forme préférée du procédé selon l'invention, lesdits objets sont des préformes en matière thermoplastique destinées à la fabrication de récipients soufflés, le deuxième poste de travail est un poste de moulage par soufflage et le premier poste de travail est un poste de préchauffage en vue dudit moulage.

Pour la mise en oeuvre de ce procédé, un dispositif selon l'invention est caractérisé en ce que ledit premier espacement est défini par un premier intervalle entre les palettes et ledit deuxième espacement est défini par un deuxième intervalle, supérieur au premier, entre les palettes, en ce que ce dispositif comporte un poste de transfert agencé pour déplacer un groupe de palettes entre un premier et un deuxième tronçon de voie qui sont décalés transversalement l'un par rapport à l'autre, et en ce que ledit poste de transfert comporte des moyens écarteurs agencés pour écarter longitudinalement les palettes d'un groupe pour créer ledit deuxième intervalle entre elles.

De préférence, ledit premier intervalle est nul, les palettes étant adjacentes sur ledit premier tronçon de voie.

Dans une forme préférée du dispositif, le premier et le deuxième tronçon de voie sont parallèles et au même niveau dans le poste de transfert, les palettes étant transférées horizontalement entre eux. Le poste de transfert peut comporter un poussoir transversal agencé pour s'appliquer latéralement contre un groupe de palettes aligné par rapport au premier tronçon de voie et déplacer ce groupe en direction du deuxième tronçon de voie. Les moyens écarteurs peuvent comporter des éléments mobiles de prise qui sont agencés pour s'engager chacun sur une palette d'un groupe aligné par rapport au second tronçon de voie, et un mécanisme écarteur agencé pour déplacer individuellement les éléments de prise, dans la direction longitudinale du deuxième tronçon de voie, avec des courses respectivement proportionnelles à la distance entre chaque élément de prise et un point de référence.

Les moyens d'entraînement peuvent comporter au moins deux peignes longitudinaux disposés le long du deuxième tronçon de voie et agencés pour s' engager chacun sur un groupe de palettes pour l'entraîner du poste de transfert au deuxième poste de travail, puis de celui-ci au poste de déchargement, les deux peignes étant déplacés en synchronisme.

Le circuit peut comporter un tronçon de retour disposé parallèlement au premier et au deuxième tronçon de voie, mais à un niveau plus bas, et le poste de chargement et un poste de réception des objets retirés des palettes peuvent être disposés au-dessus dudit tronçon de retour.

De préférence, le premier et le deuxième tronçon de voie sont reliés au tronçon de retour par des chariots de transfert transportant chacun un groupe de palettes qui comprend le même nombre de palettes que les groupes traités dans le poste de transfert.

D'autres caractéristiques et avantages de la présente invention apparaîtront dans la description suivante d'un exemple de réalisation, en référence aux dessins annexés, dans lesquels :
la figure 1 est une vue d'ensemble schématique en plan d'une installation de fabrication de récipients en matière thermoplastique à partir de préformes, par des techniques usuelles de moulage par soufflage, cette installation comportant un dispositif selon l'invention pour véhiculer les préformes et les récipients sur des palettes individuelles,
les figures 2 à 6 sont des vues schématiques en plan illustrant différentes phases d'un cycle de fonctionnement d'un poste de transfert et d'un poste de moulage de l'installation de la figure 1,
la figure 7 est une vue en plan représentant plus en détail le poste de transfert,
la figure 8 est une vue en coupe schématique suivant la ligne VIII-VIII de la figure 7, et
les figures 9 et 10 représentent, respectivement en élévation frontale et en plan, un des quatre dispositifs à chariot de transfert qui sont prévus aux extrémités de l'installation de la figure 1.

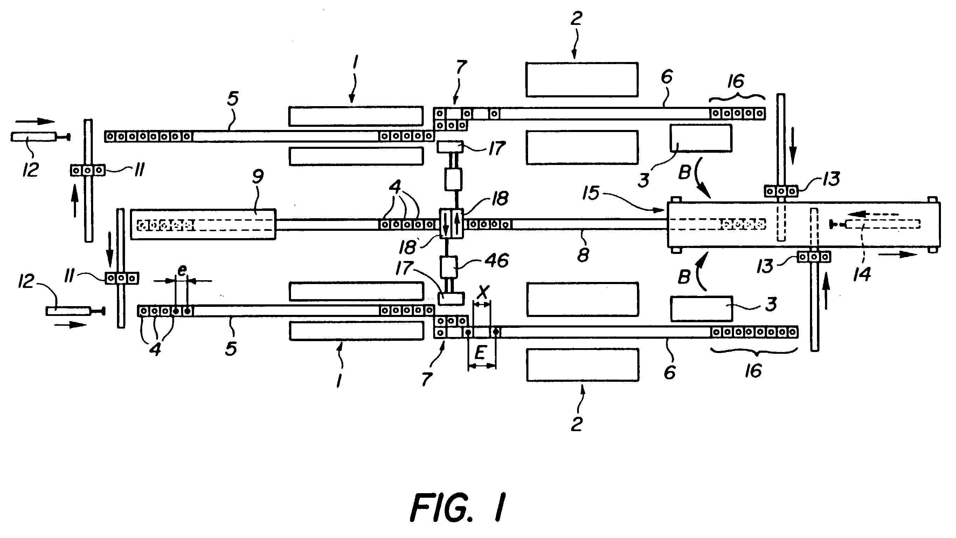

L'installation représentée à la figure 1 comporte deux lignes parallèles et identiques de fabrication de récipients en matière thermoplastique, tels que des bouteilles, à partir de préformes préalablement fabriquées par injection. Chaque ligne comporte un four de préchauffage 1, un poste de moulage 2 et un poste de déchargement 3, et est traversée par des palettes 4 circulant sur un dispositif convoyeur en circuit fermé. Sur chaque ligne, ce dispositif comporte un premier tronçon de voie 5 traversant le four 1, un deuxième tronçon de voie 6 traversant le poste de moulage 2 et le poste de déchargement 3, et un poste de transfert 7 qui fait passer des groupes de trois palettes du premier tronçon 5 au deuxième tronçon 6. Pour les deux circuits fermés, le retour des palettes 4 s'effectue sur un tronçon de retour 8 qui leur est commun et qui se trouve à un niveau inférieur à celui des tronçons 5 et 6, ce qui réduit l'encombrement total de l'installation comme on le verra plus loin. Un poste de chargement 9, placé sur le tronçon de retour 8, reçoit les préformes par des moyens d'alimentation connus et en dépose une sur chaque palette 4. A la sortie du tronçon de retour 8, les palettes sont transférées transversalement jusqu'à l'entrée du premier tronçon 5 de chaque ligne au moyen d'un chariot de transfert montant 11 qui transporte un groupe de trois palettes à la fois. Ensuite, ces palettes sont poussées en avant au moyen d'un vérin 12 qui fait avancer pas à pas l'ensemble des palettes présentes sur le tronçon 5 et adjacentes les unes par rapport aux autres, la course du vérin 12 étant égale à la longueur de trois palettes. De même, le tronçon 6 de chaque ligne est suivi d'un dispositif de transfert à chariot descendant 13 qui transporte un groupe de trois palettes jusqu'à l'entrée du tronçon de retour 8. A cet endroit, un vérin de retour 14 pousse toutes les palettes situées sur les deux chariots 13 et sur le tronçon 8 pour les faire avancer d'un pas égal à la longueur de six palettes. Ainsi, les cadences de fonctionnement des chariots 11 et 13 et des vérins 12 et 14 sont égales. Le poste de chargement 9 peut avoir la même cadence s'il est prévu pour charger six palettes en même temps. On a également la même cadence dans les postes 2 et 3 et sur chacun desdits deuxièmes tronçons 6, où l'avance des palettes est produite par un dispositif d'entraînement qui sera décrit par la suite. On notera que la disposition surbaissée du tronçon de retour 8 permet de placer au-dessus de lui un poste 15 de réception des récipients à partir des deux postes de déchargement 3, comme indiqué par les flèches B. Il en résulte à la fois une réduction de l'emprise horizontale de l'installation et un regroupement immédiat des récipients fabriqués sur les deux lignes, en vue de la manutention ultérieure. De plus, ce poste 15 se trouve dans le même alignement que le poste de chargement 9 et à une faible distance de celui-ci, ce qui réduit l'encombrement total de l'installation.

Du fait que les palettes 4 avancent par poussées longitudinales sur les tronçons 5 et 8 du circuit, ainsi que sur une zone terminale 16 de chaque tronçon 6, elles présentent entre elles un premier espacement **e** qui est minimal et correspond à la longueur d'une palette, l'intervalle entre deux palettes étant nul, cet espacement étant déterminé par l'espacement minimal des préformes dans le four de préchauffage 1.

Le poste de transfert 7 est destiné à modifier cet espacement, en écartant mutuellement les palettes 4 dans la direction longitudinale pour leur donner un second espacement **E** sur le tronçon 6 traversant le poste de moulage 2 et le poste de déchargement 3. De ce fait, on espace deux palettes consécutives d'un même groupe d'un intervalle **X**. Cette opération s'effectue en combinaison avec un déplacement transversal des palettes par groupes de trois, au moyen d'un poussoir transversal 17 actionné par un vérin 18 entre chaque poussée du vérin 12, quand les palettes sont à l'arrêt sur les tronçons 5 et 6 du circuit.

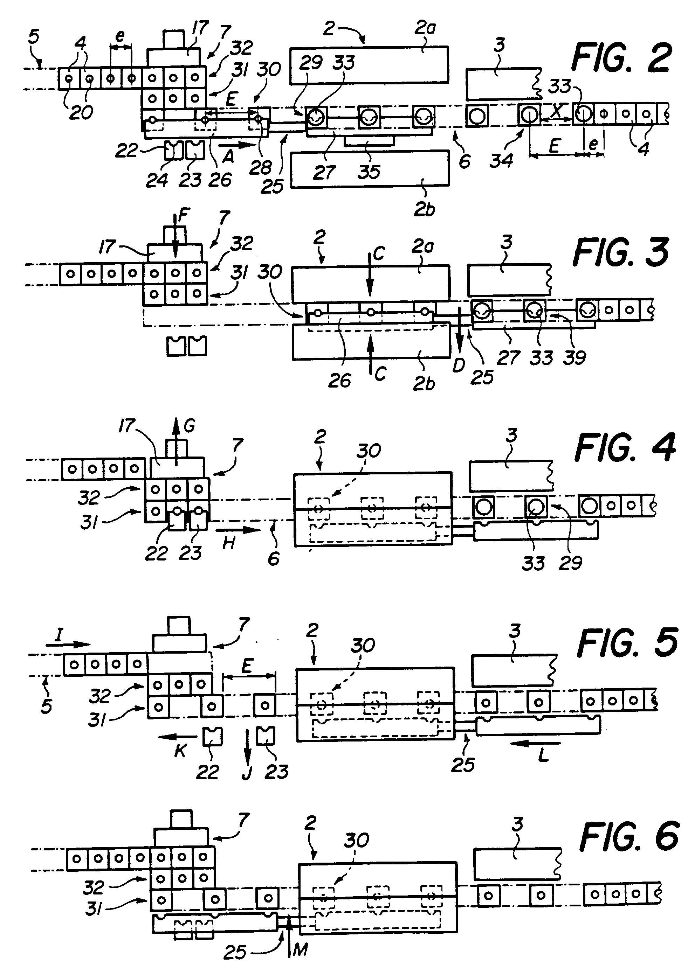

Les principaux éléments qui déplacent les palettes 4 dans le poste de transfert 7 et dans le poste de moulage 2, ainsi que leur principe de fonctionnement, sont illustrés par les figures 2 à 6, où les références 2a et 2b désignent deux moitiés de moule d'un type connu, qui s'écartent l'une de l'autre pour laisser passer entre elles les palettes ainsi que les préformes et les récipients que celles-ci portent. Le poste de transfert 7 est équipé de deux éléments écarteurs mobiles 22 et 23 ayant chacun une encoche frontale 24 qui coopère avec une protubérance inférieure prévue sur chaque palette 4 pour positionner la palette. Par ailleurs, il est prévu un mécanisme d'entraînement longitudinal 25, pourvu de deux peignes 26 et 27 ayant chacun trois encoches 28 qui s'accrochent aux palettes. Ce mécanisme est également mobile suivant deux directions perpendiculaires, pour prendre en charge des groupes de trois palettes et les faire avancer le long du deuxième tronçon 6 (figure 1) pour les transférer du poste 7 au poste 2, puis du poste 2 au poste 3. Les séquences de déplacement des groupes de trois palettes sont les suivantes.

Dans la position illustrée par la figure 2, le poste de transfert 7 est occupé par trois groupes 30, 31 et 32 de trois palettes portant des préformes. Les palettes du groupe 30 ont déjà le second écartement **E** tandis que celles des groupes 31 et 32 présentent encore le premier écartement **e** où l'intervalle entre les palettes est nul, les palettes étant appliquées longitudinalement les unes contre les autres. Par ailleurs, un autre groupe 29 de trois palettes se trouve dans le poste de moulage 2 et porte trois récipients 33 qui viennent d'être fabriqués par soufflage et libérés par écartement des moitiés de moule 2a et 2b. Un autre groupe 34 de trois palettes se trouve au poste de déchargement 3 et présente aussi le second espacement **E**, tandis que les palettes 4 situées au-delà du poste 3 sur le tronçon 6 sont à nouveau adjacentes et présentent donc entre elles le premier espacement **e**. A partir de cette position, le mécanisme d'entraînement 25 avance dans le sens de la flèche A, sous l'effet d'un organe d'entraînement 35 qui peut être placé sous lui. Ce mouvement a pour effet de transférer le groupe de palettes 29 du poste 2 au poste 3 au moyen du peigne 27 et de transférer le groupe de palettes 30 du poste 7 au poste 2 au moyen du peigne 26. Auparavant, les palettes du groupe 34 ont été poussées en avant par un système de vérin situé en partie inférieure de sorte qu'elles se rapprochent et butent les unes sur les autres en poussant en avant toutes les palettes 4 qui les précédent sur le tronçon 6.

La position atteinte à ce moment est représentée par la figure 3. Les récipients soufflés 33 peuvent continuer à se refroidir dans le poste 3 où des griffes appropriées (non représentées) sont actionnées pour saisir des récipients. Dans le poste 2, les moitiés de moule 2a et 2b se rapprochent suivant les flèches C pour se refermer sur les préformes. En outre, le mécanisme 25 est déplacé transversalement dans le sens de la flèche D pour se dégager des palettes. Pendant ce temps, le poussoir 17 du poste de transfert 7 est actionné suivant la flèche F pour déplacer transversalement les groupes de palettes 31 et 32 jusqu'à la position de la figure 4.

Les palettes du groupe 31 se trouvent alors dans l'alignement du tronçon de voie 6; deux d'entre elles sont retenues par les éléments écarteurs 22 et 23 et la troisième par un élément non représenté. Les palettes du groupe 32 occupent une position intermédiaire entre les tronçons 5 et 6. A ce stade, les récipients 33 sont retirés des palettes dans le poste 3. Le poussoir 17 recule selon la flèche G, tandis que les éléments écarteurs 22 et 23 avancent dans le sens de la flèche H pour donner aux palettes du groupe 31 le second écartement **E**, comme le montre la figure 5.

A ce stade, le vérin 12 (voir fig. 1) est actionné pour faire avancer les palettes sur le tronçon 5 dans le sens de la flèche I pour introduire trois nouvelles palettes dans le poste de transfert 7. Les éléments écarteurs 22 et 23 ont été reculés comme l'indique la flèche J et sont ramenés à leur position initiale comme l'indique la flèche K. Pendant ce temps, le soufflage des récipients du groupe de palettes 30 s'achève dans le poste de moulage 2. En même temps, le mécanisme 25, dont les peignes sont dégagés des palettes, effectue sa course de retour jusqu'à sa position initiale illustrée par la figure 6, à partir de laquelle il pourra être déplacé transversalement suivant le flèche L pour que ses peignes 27 et 26 s'engagent respectivement sur les groupes de palettes 30 et 31 comme le montre la figure 2.

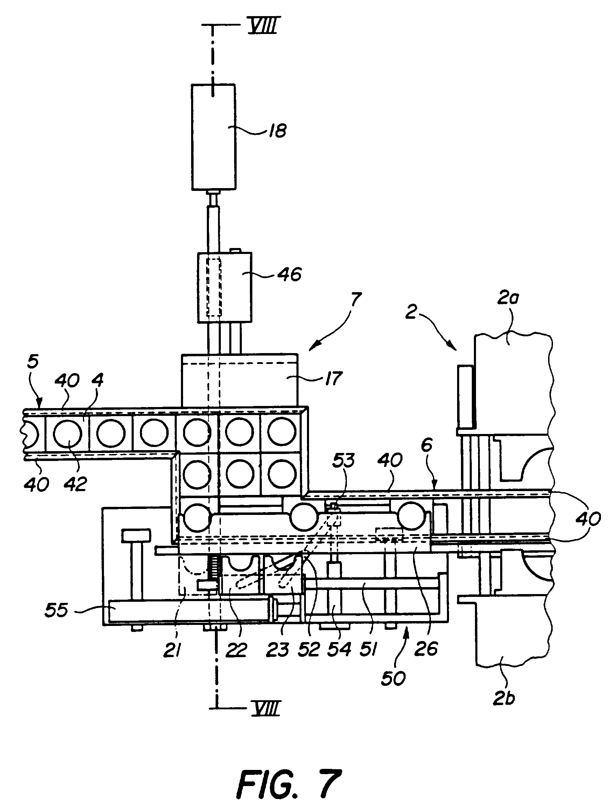

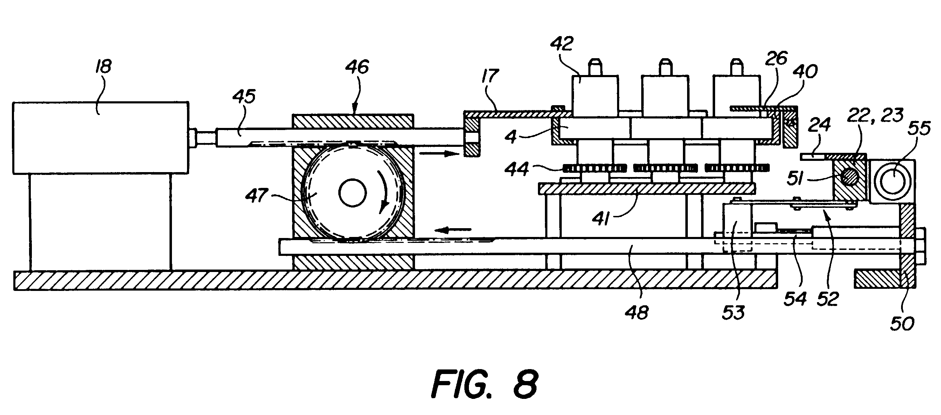

Les figures 7 et 8 montrent plus en détail la construction du poste de transfert 7 entre les tronçons de voie 5 et 6. Dans cet exemple, ces tronçons sont constitués par des paires de rails latéraux 40 qui supportent et guident les bords des palettes, celles-ci étant en outre soutenues par un plateau horizontal 41 (figure 8) dans le poste de transfert. Les palettes 4 représentées ici sont d'un type courant et se composent d'un plateau de bois portant une embase cylindrique 42 dans laquelle se trouve un élément central pivotant qui présente un embout supérieur 43, où sont emboîtés les embouchures des préformes, et d'un pignon inférieur 44 permettant de faire tourner les préformes pendant qu'elles traversent le four de préchauffage. Toutefois, le dispositif décrit ici peut être adapté à n'importe quel autre type de palettes.

Le poussoir 17 est entraîné par le vérin hydraulique ou pneumatique 18 au moyen d'une tige à crémaillère 45 traversant un dispositif de renvoi 46 à roue dentée 47 qui attaque une autre tige horizontale 48 par une crémaillère. Cette tige 48 est destinée à entraîner, en synchronisme et en opposition avec le poussoir 17, un châssis mobile qui porte les éléments écarteurs 22 et 23. Ceux-ci coulissent sur une barre 51 et sont liés à une tringlerie articulée 52 reliée à un bloc 53 qui coulisse transversalement sur un guide 54. La cinématique de la tringlerie 52 est telle qu'elle impose à l'élément écarteur 22 une course égale à la moitié de celle de l'élément 23 qui est entraîné par un vérin pneumatique longitudinal 55. La course peut être ajustée en vue de modifier l'espacement **E** si nécessaire.

Les peignes 26 et 27 du mécanisme d'entraînement 25 se trouvent immédiatement au-dessus des rails de guidage 40 et coopèrent avec les embases 42 des palettes, de sorte qu'ils n'interfèrent pas avec les éléments écarteurs 22 et 23 dans le poste de transfert 7. Le cas échéant, le jeu d'éléments écarteurs 22 et 23 peut être complété par un premier élément 21 qui est fixe sur la barre de guidage 51 et ne se déplace donc que transversalement par rapport aux palettes, pour recevoir la dernière palette d'un groupe et la maintenir en place pendant que les autres sont écartées.

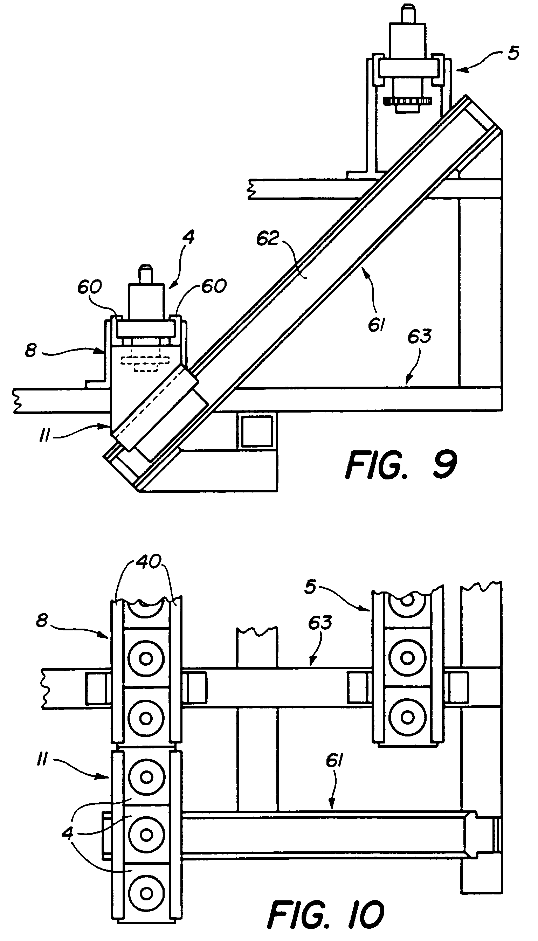

Les figures 9 et 10 montrent schématiquement la construction du chariot de transfert montant 11 qui fait passer des groupes de trois palettes 4 du tronçon 8 au tronçon 5 du circuit de convoyage. Le chariot 11 supporte les palettes 4 au moyen de deux rails latéraux 60 semblables aux rails 40 des circuits 8 et 5. Il possède une base inclinée chevauchant un rail 61 qui la supporte et la guide par l'intermédiaire de roulements. En même temps, le rail 61, contient un vérin pneumatique (non représenté) du type comportant un piston fixé à deux bandes sans fin dont chacune longe une face extérieure 62 du rail 61 où elle est fixée au chariot 11 de façon à pouvoir l'entraîner dans les deux sens. Le rail 61 est simplement monté sur la structure 63 supportant les tronçons 5 et 8 du circuit de convoyage. Un tel dispositif s'avère très simple et capable de transférer les palettes à une cadence élevée, de sorte que la disposition des tronçons 5 et 8 à différents niveaux ne présente pas d'inconvénients à cet égard. Le type de vérin dit "vérin sans tige" peut bien entendu être remplacé par tout autre vérin connu ou par un mécanisme à chaîne ou à câble assurant la même fonction. Les chariots de transfert montants 11 et descendants 13 définissent avec les rails 61 des ascenseurs et des descendeurs dont la fonction consiste à faire passer les palettes d'une partie des circuits sur l'autre partie, en l'occurrence le tronçon de retour, et réciproquement, ces deux parties étant disposées à des niveaux différents pour des raisons d'encombrement. En effet une telle disposition est particulièrement avantageuse parce qu'elle permet de réduire l'encombrement en largeur de la ligne et d'utiliser un espace relativement peu encombré sous les tronçons du circuit portant les fours et les moules.

La présente invention n'est pas limitée à l'exemple de réalisation et d'application décrit ici, mais elle s'étend à toute modification ou variante évidente pour un homme du métier. L'invention couvre également une variante où le poste de transfert est agencé pour écarter mutuellement les palettes d'un groupe pendant leur déplacement transversal, par exemple au moyen de guides disposés en éventail et coopérant avec les éléments inférieurs des palettes.

## Revendications

1. Procédé pour véhiculer des objets le long d'un circuit, dans lequel on place chaque objet sur une palette de transport (4) et l'on fait cheminer les palettes pas à pas le long du circuit (5, 6, 8, 11, 13) pour leur faire traverser successivement un premier poste de travail (1), où les objets présentent entre eux un premier espacement longitudinal **(e)**, et au moins un deuxième poste de travail (2, 3) où les objets présentent entre eux un deuxième espacement longitudinal **(E)**, supérieur au premier espacement, ce procédé comprenant une étape d'écartement des objets entre le premier et le deuxième poste de travail, caractérisé en ce que ledit premier espacement est défini par un premier intervalle entre les palettes et ledit deuxième espacement est défini par un deuxième intervalle **(X)**, supérieur au premier, entre les palettes, et en ce que, dans l'étape d'écartement, on déplace transversalement un groupe (29, 30, 31, 32, 34) de palettes présentant le premier intervalle et l'on écarte longitudinalement les palettes de ce groupe pour obtenir le deuxième intervalle entre elles, puis on introduit ces palettes ainsi espacées dans le deuxième poste de travail.

2. Procédé selon la revendication 1, caractérisé en ce que ledit premier intervalle est nul, les palettes étant adjacentes.

3. Procédé selon la revendication 1, caractérisé en ce que ledit déplacement transversal est un déplacement horizontal entre deux tronçons de circuit (5, 6) qui sont parallèles.

4. Procédé selon la revendication 1, 2 ou 3, caractérisé en ce que l'on rapproche à nouveau les palettes au-delà du deuxième poste de travail pour rétablir le premier intervalle entre elles.

5. Procédé selon la revendication 1, caractérisé en ce que, dans un premier temps, on déplace transversalement les palettes audit groupe et que; dans un second temps, on écarte ces palettes pour obtenir ledit deuxième intervalle, ces deux opérations étant effectuées simultanément sur deux groupes adjacents.

6. Procédé selon la revendication 1, caractérisé en ce que l'on déplace transversalement et l'on écarte longitudinalement les palettes dudit groupe pour obtenir ledit deuxième intervalle, ces deux opérations étant effectuées simultanément.

7. Procédé selon l'une des revendications précédentes, dans lequel lesdits objets sont des préformes (20) en matière thermoplastique destinées à la fabrication de récipients soufflés (33), caractérisé en ce que le deuxième poste de travail (2) est un poste de moulage par soufflage et le premier poste de travail (1) est un poste de préchauffage en vue dudit moulage.

8. Dispositif pour véhiculer des objets le long d'un circuit, pour la mise en oeuvre du procédé selon la revendication 1, comportant des palettes de transport (4) disposées en file sur des tronçons de voie (5, 6, 8) formant au moins une partie dudit circuit et traversant successivement un poste de chargement (9) où chaque objet (20) est placé sur une palette, un premier poste de travail (1), au moins un deuxième poste de travail (2) où les objets sont traités en groupes d'objets, et un poste de déchargement (3) où les objets sont retirés des palettes, les objets présentant entre eux, au premier poste de travail, un premier espacement longitudinal **(e)** et, au deuxième poste de travail, un deuxième espacement longitudinal **(E)** supérieur au premier espacement, le dispositif comportant des moyens d'entraînement (12, 14, 25) pour faire avancer les palettes pas à pas le long des tronçons de voie, caractérisé en ce que ledit premier espacement **(e)** est défini par un premier intervalle entre les palettes et ledit deuxième espacement **(E)** est défini par un deuxième intervalle (**X**), supérieur au premier, entre les palettes, en ce que ce dispositif comporte un poste (7) de transfert agencé pour déplacer un groupe (29, 30, 31, 32, 34) de palettes entre un premier et un deuxième tronçon de voie (5, 6) qui sont décalés transversalement l'un par rapport à l'autre, et en ce que ledit poste de transfert (7) comporte des moyens écarteurs (21, 22, 23, 50-55) agencés pour écarter longitudinalement les palettes d'un groupe pour créer ledit deuxième intervalle entre elles.

9. Dispositif selon la revendication 8, caractérisé en ce que ledit premier intervalle est nul, les palettes étant adjacentes sur ledit premier tronçon de voie (5).

10. Dispositif selon la revendication 8, caractérisé en ce que le premier et le deuxième tronçon de voie (5, 6) sont parallèles et au même niveau dans le poste de transfert (7), les palettes étant transférées horizontalement entre eux.

11. Dispositif selon la revendication 10, caractérisé en ce que le poste de transfert comporte un poussoir transversal (17) agencé pour s'appliquer latéralement contre un groupe de palettes aligné par rapport au premier tronçon de voie (5) et déplacer ce groupe en direction du deuxième tronçon de voie (6).

12. Dispositif selon la revendication 11, caractérisé en ce que les moyens écarteurs comportent des éléments mobiles de prise (22, 23) qui sont agencés pour s'engager chacun sur une palette d'un groupe aligné par rapport au second tronçon de voie (6), et un mécanisme écarteur (52-55) agencé pour déplacer individuellement les éléments de prise, dans la direction longitudinale du deuxième tronçon de voie (6), avec des courses respectivement proportionnelles à la distance entre chaque élément de prise (22, 23) et un point de référence (21).

13. Dispositif selon la revendication 8, caractérisé en ce que les moyens d'entraînement comportent au moins deux peignes longitudinaux (26, 27) disposés le long du deuxième tronçon de voie (6) et agencés pour s'engager chacun sur un groupe de palettes (29, 30, 31) pour l'entraîner du poste de transfert (7) au deuxième poste de travail (2), puis de celui-ci au poste de déchargement (3) les deux peignes étant déplacés en synchronisme.

14. Dispositif selon la revendication 10, caractérisé en ce que le circuit comporte un tronçon de retour (8) disposé parallèlement au premier et au deuxième tronçon de voie (5, 6), mais à un niveau plus bas, et en ce que le poste de chargement (9) et un poste de réception (15) des objets retirés des palettes sont disposés au-dessus dudit tronçon de retour (8).

15. Dispositif selon la revendication 14, caractérisé en ce que le premier et le deuxième tronçon de voie (5, 6) sont reliés au tronçon de retour (8) par des chariots de transfert (11, 13) transportant chacun un groupe de palettes qui comprend le même nombre de palettes que les groupes traités dans le poste de transfert (7).

16. Utilisation d'un dispositif selon la revendication 8, pour véhiculer des préformes (20) dans une installation de fabrication de récipients soufflés en matière thermoplastique.

## Patentansprüche

1. Verfahren zum Fortbewegen von Gegenständen entlang einer Bahn, auf der man jeden Gegenstand auf einer Transportpalette (4) absetzt und die Paletten schrittweise einen Weg entlang der Bahn (5,6,8,11, 13) zurücklegen läßt, um sie nacheinander eine erste Arbeitsstation (1) passieren zu lassen, in der die Gegenstände zwischen sich einen ersten Längsabstand (e) haben, und mindestens eine zweite Arbeitsstation (2,3), in der die Gegenstände zwischen sich einen zweiten Längsabstand (E) haben, der größer als der erste Abstand ist, wobei dieser Vorgang zwischen der ersten und der zweiten Arbeitsstation eine Stufe zum Auseinanderrücken der Gegenstände aufweist,
**dadurch gekennzeichnet,** daß der erste Abstand durch einen ersten Zwischenraum zwischen den Paletten festgelegt ist, und der zweite Abstand durch einen zweiten Zwischenraum (X) zwischen den Paletten festgelegt ist, der größer als der erste Zwischenraum ist, und daß man in der Stufe zum Auseinanderrücken eine Gruppe von Paletten (29,30,31,32,34), welche zwischen sich den ersten Zwischenraum haben, quer verschiebt und man die Paletten dieser Gruppe der Länge nach auseinanderrückt, um zwischen ihnen den zweiten Zwischenraum zu erhalten, worauf man die derart auseinandergerückten Paletten der zweiten Arbeitsstation zuführt.

2. Verfahren nach Anspruch 1,
**dadurch gekennzeichnet,** daß der erste Zwischenraum Null ist, wobei die Paletten aneinanderstoßen.

3. Verfahren nach Anspruch 1,
**dadurch gekennzeichnet,** daß die Querverschiebung eine horizontale Verschiebung zwischen zwei parallelen Bahnabschnitten (5,6) ist.

4. Verfahren nach den Ansprüchen 1, 2 oder 3,
**dadurch gekennzeichnet,** daß man die Paletten nach der zweiten Arbeitsstation wieder zusammenrückt, um zwischen ihnen wieder den ersten Zwischenraum herzustellen.

5. Verfahren nach Anspruch 1,
**dadurch gekennzeichnet,** daß man zuerst die Paletten einer Gruppe quer verschiebt, und daß man dann diese Paletten auseinanderrückt, um den zweiten Zwischenraum zu erhalten, wobei man diese zwei Operationen gleichzeitig an zwei benachbarten Gruppen ausführt.

6. Verfahren nach Anspruch 1,
**dadurch gekennzeichnet,** daß man die Paletten der jeweiligen Gruppe quer verschiebt und der Länge nach auseinanderrückt, um den zweiten Zwischenraum zu erhalten, wobei man diese zwei Operationen gleichzeitig ausführt.

7. Verfahren nach einem der vorhergehenden Ansprüche, bei welchem die Gegenstände Vorformlinge (20) aus thermoplastischem Werkstoff sind, die zur Herstellung von geblasenen Behältern (33) dienen,
**dadurch gekennzeichnet,** daß die zweite Arbeitsstation (2) eine Station zum Blasformen und die erste Arbeitsstation (1) eine Vorwärmstation im Hinblick auf dieses Formen ist.

8. Vorrichtung zum Fortbewegen der Gegenstände entlang einer Bahn zur Durchführung des Verfahrens nach Anspruch 1, welche folgendes umfaßt:
Transportpaletten (4), die hintereinander auf Schienenabschnitten (5,6,8) angeordnet sind, welche mindestens einen Teil der Bahn darstellen und die nacheinander eine Beschickungsstation (9) durchlaufen, in der man jeden Gegenstand (20) auf eine Palette setzt, eine erste Arbeitsstation (1), mindestens eine zweite Arbeitsstation (2), in der die Gegenstände gruppenweise bearbeitet werden, und eine Entnahmestation (3), in der man die Gegenstände von den Paletten nimmt, wobei die Gegenstände untereinander an der ersten Arbeitsstation einen ersten Längsabstand (e) haben und an der zweiten Arbeitsstation einen zweiten Längsabstand (E), der größer ist als der erste Längsabstand, wobei die Vorrichtung Bewegungseinrichtungen (12, 14,25) aufweist, um die Paletten entlang der Schienenabschnitte schrittweise weiterzubewegen,
**dadurch gekennzeichnet,** daß der erste Abstand (e) durch einen ersten Zwischenraum zwischen den Paletten und der zweite Abstand (E) durch einen zweiten Zwischenraum (X) zwischen den Paletten festgelegt ist, der größer als der erste Zwischenraum ist, daß die Vorrichtung eine Übergabestation (7) aufweist, die dazu dient, eine Gruppe (29,30,31,32,34) von Paletten zwischen einem ersten und einem zweiten Schienenabschnitt (5, 6), die quer zueinander versetzt sind, zu verschieben, und daß die Übergabestation (7) Spreizeinrichtungen (21,22,23,50-55) aufweist, die dazu dienen, die Paletten einer Gruppe der Länge nach auseinanderzurücken, um zwischen ihnen den zweiten Zwischenraum zu schaffen.

9. Vorrichtung nach Anspruch 8,
**dadurch gekennzeichnet,** daß der erste Zwischenraum Null ist, wobei die Paletten auf dem ersten Schienenabschnitt (5) aneinanderliegen.

10. Vorrichtung nach Anspruch 8,
**dadurch gekennzeichnet,** daß der erste und der zweite Schienenabschnitt (5,6) an der Übergabestation (7) parallel zueinander sind und auf gleicher Höhe liegen und sich die Paletten zueinander horizontal verschieben.

11. Vorrichtung nach Anspruch 10,
**dadurch gekennzeichnet,** daß die Übergabestation einen querliegenden Stößel (17) aufweist, der dazu dient, seitlich gegen eine auf dem ersten Schienenabschnitt (5) in einer Reihe aufgestellte Gruppe von Paletten zu drücken und diese Gruppe in Richtung auf den zweiten Schienenabschnitt (6) zu schieben.

12. Vorrichtung nach Anspruch 11,
**dadurch gekennzeichnet,** daß die Spreizeinrichtungen bewegliche Greifelemente (22,23) aufweisen, die dazu dienen, jeweils an einer Palette einer auf dem zweiten Schienenabschnitt (6) aufgereihten Gruppe anzusetzen, und einen Spreizmechanismus (52-55), der dazu dient, die Greifelemente in Längsrichtung des zweiten Schienenabschnittes (6) einzeln zu verschieben, und zwar auf Strecken, die jeweils proportional zum Abstand zwischen jedem Greifelement (22,23) und einem Bezugspunkt (21) sind.

13. Vorrichtung nach Anspruch 8,
**dadurch gekennzeichnet,** daß die Bewegungseinrichtungen mindestens zwei Längsrechen (26,27) aufweisen, die entlang des zweiten Schienenabschnittes (6) angeordnet sind und dazu dienen, jeweils an einer Gruppe von Paletten (29,30,31) anzusetzen, um sie von der Übergabestation (7) zur zweiten Arbeitsstation (2) zu befördern und dann von dieser zur Entnahmestation (3), wobei sich die zwei Rechen synchron verschieben.

14. Vorrichtung nach Anspruch 10,
**dadurch gekennzeichnet,** daß die Bahn einen Rücklaufabschnitt (8) aufweist, der parallel zum ersten und zum zweiten Schienenabschnitt (5,6), aber auf tieferem Niveau angeordnet ist, und daß die Entnahmestation (9) und eine Ablagestation (15) für die von den Paletten entnommenen Gegenstände unterhalb des Rücklaufabschnittes (8) angeordnet sind.

15. Vorrichtung nach Anspruch 14,
**dadurch gekennzeichnet,** daß der erste und der zweite Schienenabschnitt (5,6) mit dem Rücklaufabschnitt (8) durch Übergabeschlitten (11,13) verbunden sind, wobei jeder eine Palettengruppe befördert, welche die gleiche Anzahl von Paletten aufweist, wie die in der Übergabestation (7) bewegten Gruppen.

16. Verwendung einer Vorrichtung nach Anspruch 8,
um Vorformlinge (20) in einer Anlage zur Fertigung von geblasenen Behältern aus thermoplastischem Werkstoff zu transportieren.

## Claims

1. A process for transporting objects along a circuit, wherein each object is placed upon a transport pallet (4) and the pallets are moved in steps along the circuit (5, 6, 8, 11, 13) to pass in succession through a first work station (1) where the objects are separated by a first longitudinal interval (e) and at least one second work station (2, 3) where the objects are separated by a second longitudinal interval (E), larger than the first interval, said method comprising the step of separating the objects between the first and the second work stations, characterized in that said first spacing is defined by a first interval between pallets and said second spacing is defined by a second interval (X) between pallets, larger than the first, and in that during the separation phase, one group of pallets (29, 30, 31, 32, 34) separated by the first interval is transversely displaced and the pallets in this group are longitudinally separated to form the second interval between them, and the pallets thus spaced are then introduced into the second work station.

2. A process according to claim 1 characterized in that said first interval is nil and the pallets are adjacent.

3. A process according to claim 1 characterized in that said transverse displacement consists of horizontal displacement between two parallel sections of track (5, 6).

4. A process according to claim 1, 2 or 3 characterized in that after the second work station that pallets are moved together to reestablish the first spacing interval.

5. A method according to claim 1 characterized that in the first instance the pallets in said group are transversely displaced and in the second instance, these pallets are separated, forming the second interval, with these two operations occurring simultaneously in two adjacent groups.

6. A method according to claim 1 characterized in that the pallets in said group are transversely displaced and longitudinally separated to form said second interval, with these two operations occurring simultaneously.

7. A method according to any one of the preceding claims wherein said objects are thermoplastic preforms (20) for the manufacture of blow-molded containers (33), characterized in that the second work station (2) is a blow-molding station and the first work station (1) is a preheating station to prepare for molding.

8. A device for moving objects along a circuit using the method of claim 1, consisting of transport pallets (4) arranged in a line on sections of track (5, 6, 8) forming at least one portion of said circuit and successively passing through a loading station (9) where each object (20) is placed upon a pallet, a first work station (1), at least one second work station (2) where the objects are treated in groups, and a discharge station (3) where the objects are removed from the pallets; at the first work station the objects are separated by a first longitudinal interval (e) and at the second work station, by a second longitudinal interval (E) greater than the first interval, said device comprising drive means (12, 14, 25) advancing the pallets in steps along the track sections, and characterized in that the first space (e) is defined by a first interval between pallets and the second space (E) is defined by a second interval (X) between pallets, larger than the first, and in that the device further comprises a transfer station (7) which displaces a group of pallets (29, 30, 31, 32, 34) between a first and a second section of track (5, 6) transversely separated from each other, and in that said transfer station (7) comprises engaging means (21, 22, 23, 50-55) which longitudinally separate the pallets in a group to create said second interval between them.

9. A process according to claim 8 characterized in that said first interval is nil, the pallets being adjacent on said first section of track (5).

10. A device according to claim 8 characterized in that the first and the second section of track (5, 6) are parallel and at the same level at the transfer station (7), the pallets being transferred horizontally between them.

11. A device according to claim 10 characterized in that the transfer station comprises a transverse ram (17) which is applied laterally to a group of pallets aligned with the first section of track (5) and displaces this group toward the second section of track (6).

12. A device according to claim 11 characterized in that the separation means consist of movable separating elements (22, 23) which each engage with one pallet in a group aligned with the second section of track (6), and a separating mechanism (52-55) which displaces the engaging means individually and longitudinally toward the second section of track (6), along a course which is respectively proportionate to the distance between each engaging element (22, 23) and a reference point (21).

13. A device according to claim 8 characterized in that the drive means consists of at least two longitudinal comb mechanisms (26, 27) disposed along the second section of track (6), each comb mechanism engaging with a group of pallets (29, 30, 31) to drive it to the transfer station (7) at the second work station (2), and thereafter to the discharge station (3) both comb mechanisms being displaced synchronously.

14. A device according to claim 10 characterized in that the circuit comprises a return track (8) which is parallel to the first and second track sections (5, 6), but on a lower level, and in that the loading station (9) and a receiving station (15) which receives objects removed from the pallets are disposed above said return track (8).

15. A device according to claim 14 characterized in that the first and the second sections of track (5, 6) are connected to the return track (8) by transfer trolleys (11, 13) which each transport a group of pallets comprising the same number of pallets as are in the groups treated at the transfer station (7).

16. The use of the device according to claim 8 to move preforms (20) in a plant manufacturing blow-molded thermoplastic containers.
